# EUROPÄISCHE PATENTSCHRIFT

(11) **EP 1 601 881 B1**
(45) Veröffentlichungstag und Bekanntmachung des Hinweises auf die Patenterteilung: **25.10.2006**
(21) Anmeldenummer: 04710781.8
(22) Anmeldetag: 13.02.2004
(51) Int. Cl.: F16B 12/60, A47B 87/00, E04B 1/61

(54) **BESCHLAG MIT ARRETIERVORRICHTUNG**
FITTING WITH AN ARRESTING DEVICE
ARMATURE COMPRENANT UN DISPOSITIF D'ARRET

(30) Priorität: 13.02.2003 DE 10306201
(43) Veröffentlichungstag der Anmeldung: 07.12.2005
(73) Patentinhaber: Knapp, Friedrich, 85591 Vaterstetten (DE)
(72) Erfinder: Knapp, Friedrich, 85591 Vaterstetten (DE)
(74) Vertreter: Müller, Thomas
(86) Internationale Anmeldenummer: PCT/DE2004/000275
(87) Internationale Veröffentlichungsnummer: WO 2004/072494

(56) Entgegenhaltungen:
- DE-A- 4 421 398
- DE-C- 63 187
- DE-U- 1 794 936

## Beschreibung

Die Erfindung betrifft einen Beschlag zum Verbinden zweier Bauteile. Es ist bereits eine Vielzahl von Beschlägen für derartige Verbindungen bekannt. So ist z. B. in der DE-AS 1 779 745 ein Beschlag mit einer gekröpfte Federleiste beschrieben, die in einer relativ tiefen Ausnehmung versenkt ist. Der gekröpfte Endabschnitt der Federleiste weist einen Längsschlitz zur Aufnahme eine Halteschraube auf. Die Halteschraube ist im zu verbindenden Gegenstück eingedreht, wobei der Längsschlitz den Kopf der Halteschraube im Verbindungszustand hintergreift. Eine derartige Anordnung ist jedoch nur für eine geringe Belastung geeignet, wobei auch starre Kröpfungen die Tendenz zum Aufbiegen unter Belastung aufweisen. Ein weiterer Mangel von Verbindungen mit gekröpften Endabschnitten ist die relativ große Einbautiefe, so daß durch die erforderliche Ausfräsung der Materialquerschnitt einer Platte oder der Materialquerschnitt an der Längsseite eines Kantholzes geschwächt wird. Derartige Beschlagkonstruktionen sind in der Regel so ausgelegt, daß durch ein Zusammenstecken die Verbindung erfolgt und durch entgegengesetztes Ziehen die Verbindung gelöst wird. Ein unerwünschtes Lösen der Verbindung wird im allgemeinen durch eine separate Arretierung verhindert.

Einen weiteren Beschlag zum Verbinden von Bauteilen beschreibt die DE 44 21 398 A1. Dieser Beschlag weist mindestens zwei stab- oder plattenförmige Beschlagelemente auf, die jeweils als eine Beschlaghälfte mit einem Bauteil verbunden werden. Die Beschlaghälften haben im wesentlichen einen rechteckigen Querschnitt und eine gleichbleibende Materialstärke, wobei ein Ende eines der Beschlagelemente als gekröpfte Verbindungszunge ausgebildet ist, die zu dem als Befestigungsbasis dienenden Rest des Beschlagelements parallel versetzt ist. Dieser Beschlag ist wesentlich stabiler als der Beschlag aus der DE-AS 1 779 745, er muß jedoch gegen unerwünschtes Lösen ebenfalls separat arretiert werden.

Es ist daher die Aufgabe der Erfindung einen Beschlag zum Verbinden von Bauteilen zu schaffen, der sehr einfach und kostengünstig herstellbar ist und gleichzeitig nur eine sehr geringe Einbautiefe erfordert. Weiterhin soll der Beschlag sehr stabil und gegen unbeabsichtigtes Lösen gesichert sein.

Diese Aufgabe wird durch einen Beschlag nach Patentanspruch 1 gelöst.
Ein Beschlag zum Verbinden von Bauteilen besteht aus plattenförmigen Beschlagteilen, die vorzugsweise aus Metall sind. Jedes dieser Beschlagteile wird auf die zu verbindenden Stellen der Bauteile mittels Befestigungsschrauben aufgeschraubt. Die Beschlagteile sind eben und haben wenigstens eine seitliche schlitzförmige Ausnehmung. Gegenüber dieser schlitzförmigen Ausnehmung ist eine erste Bohrung vorgesehen, durch die hindurch im Montagezustand eine erste Zugschraube so weit eingeschraubt ist, daß der Schraubenkopf ein vorbestimmtes Maß hervorsteht. Die schlitzförmige Ausnehmung ist auf ein vorbestimmtes Maß hinterschnitten, so daß im Montagezustand die Ausnehmung des einen Beschlagteils den hervorstehendem Schraubenkopf des anderen Beschlagteils hintergreift und beide plattenförmigen Beschlagteile plan aneinandergepreßt sind. Am Ende der schlitzförmigen Ausnehmung in Richtung der ersten Bohrung ist eine zweite Bohrung vorgesehen, durch die hindurch eine zweite Zugschraube mit einem versenkten Kopf eingeschraubt ist, d. h. die Schraube ist soweit versenkt, daß die Planlage der Beschlagteile nicht behindert ist. Weiterhin weist der Beschlag wenigstens eine Arretiervorrichtung mit folgenden Merkmalen auf:

Am Außenendabschnitt ist das Beschlagteil keilförmig ausgebildet, wobei wenigstens eine der gegenüberliegenden Seiten keilförmig ausgebildet sein muß. Zweckmäßigerweise verlaufen jedoch beide Seiten des Bauteilendabschnittes schräg nach vorn, d. h. aufeinander zu. Die schräg verlaufende Seite, nachfolgend als Keilflanke bezeichnet, weist am hinteren Ende, d. h. zur Bauteilmitte hin, eine Einrastausnehmung auf. Am korrespondierenden Beschlagteil ist ein drahtförmiges Federelement angeordnet. Wenigstens ein Abschnitt des Federelements ist als Arretierabschnitt ausgebildet, dessen Funktion nachfolgend erläutert wird:

Der Arretierabschnitt ist ein Teil des Federelements, z. B. das Ende. Das Federelement ist so ausgebildet und befestigt, daß der Arretierabschnitt im eingerasteten Zustand in der Einrastausnehmung zur Anlage kommt. Wenn die Beschlagteile ineinander verschoben werden, verschiebt die vorrückende Keilflanke den Arretierabschnitt gegen die Federkraft des Federelements, wobei der Arretierabschnitt auf der Keilflanke so weit gleitet, bis die Einrastausnehmung am Ende der Keilflanke erreicht ist und der Arretierabschnitt in die Einrastausnehmung einschnappt. Dem Fachmann ist klar, daß es zur Gestaltung des Federelements mit dem Arretierabschnitt unterschiedlichste Möglichkeiten gibt. Gemäß der technischen Lehre muß lediglich gesichert sein, daß das Federelement frei beweglich ist, d. h. die federnde Funktion muß unter allen Betriebsbedingungen gewährleistet sein.

Dieser Beschlag weist eine Reihe von Vorteilen auf:
Der Hauptvorteil besteht in der besonders flachen Bauweise, d. h. an den Verbindungsstellen sind keine tiefen Ausfräsungen erforderlich, die den Querschnitt der zu verbindenden Bauteile schwächen würden. Ein weitere Vorteil ist die Variationsbreite des Beschlages hinsichtlich seiner Größe. Es stehen Bleche unterschiedlichster Dicke als Halbzeug zur Verfügung und dazu passende Standardschrauben. Der Beschlag ist sehr einfach aufgebaut und läßt sich gut berechnen, d. h. es sind lediglich die bautechnisch standardisierten Halte- bzw. Auszugskräfte von Schrauben in Holz oder Kunststoff anzusetzen, um die Haltekraft des Beschlages zu berechnen. Dadurch können bautechnische Zulassungen verkürzt werden oder können ganz entfallen. Die Schrauben können auch durch andere Befestigungselemente ersetzt werden, wie z. B. durch Zuganker, wenn große Kräfte aufzunehmen sind. Mittels der Arretiervorrichtung wird ein unbeabsichtigtes Lösen des Beschlags sicher verhindert, da das Federelement nur durch eine Zerstörung, d. h. durch plastisches Aufbiegen entfernt werden kann. Da das Federelement am Beschlag selbst angeordnet ist und beim Zusammenfügen die Arretierung selbsttätig erfolgt, ist eine hohe Funktionssicherheit gewährleistet.

Nach Anspruch 2 ist die Einrastausnehmung hinterschnitten. Die Hinterschneidung bewirkt eine formschlüssige Verbindung, so daß ein Herausziehen des Arretierabschnitts gegen die Federkraft verhindert wird.
Nach Anspruch 3 wird eine besonders einfache und funktionell sehr sichere Ausführung des Federelements offenbart, wobei das Federelement ein U-förmig gebogener Federstahldraht ist, dessen Enden rechtwinklig nach oben abgewinkelt sind. Das Federelement ist an der Unterseite des Beschlagteils in einer Ausnehmung angeordnet, wobei die abgewinkelten Enden in seitlichen Schlitzen des Beschlagteils liegen und über der Oberfläche des Beschlagteils so weit herausragen, um mit den gegenüberliegenden zwei Keilflanken des korrespondierenden Beschlagteils in Wirkverbindung treten zu können.

Nach Anspruch 4 ist der Querschnitt des drahtförmiges Federelements ein Kreis oder ein Rechteck, so daß das Federelement aus handelsüblichen Federstahldraht herstellbar ist.

Nach Anspruch 5 weist die Arretiervorrichtung eine Eingriffsausnehmung zum Entfernen des Federelements auf, so daß im Verbundzustand das Federelement entfernt werden kann, wobei es jedoch plastisch verformt oder zerstört wird.

Nach Anspruch 6 ist die Arretiervorrichtung wechselseitig an beiden Beschlagteilen vorgesehen ist, was die Stabilität der Verbindung gegen unbeabsichtigtes Öffnen vergrößert.

Die Erfindung wird nachfolgend an Hand eines Ausführungsbeispiels in Verbindung mit Zeichnungen näher erläutert.
- Fig. 1a, b: zeigen den Beschlag in offener und geschlossener Stellung.
- Fig. 2: zeigt eine Beschlaghälfte.
- Fig. 3: zeigt das Federelement der Arretiervorrichtung.

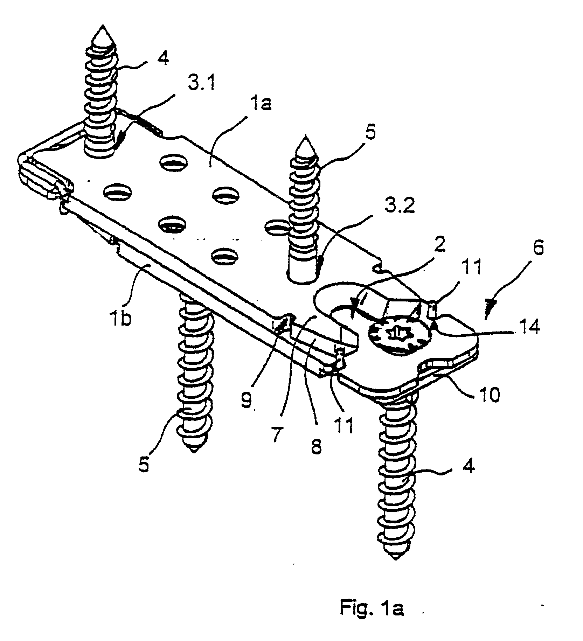

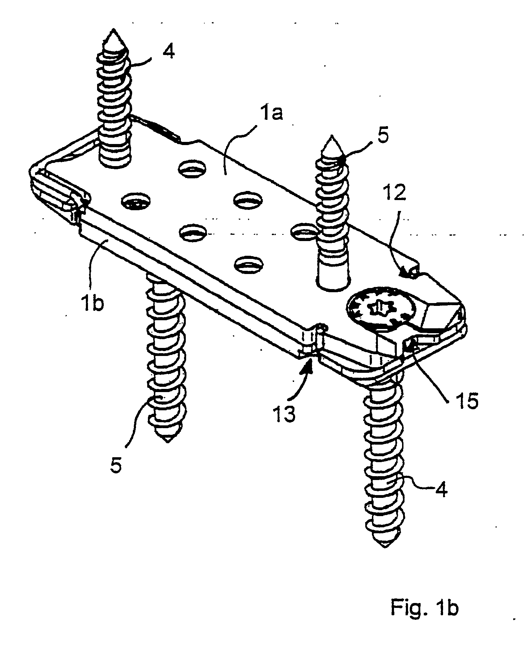

Die Fig. 1a, b zeigen einen Beschlag 1 aus zwei plattenförmigen, rechteckigen Beschlagteilen 1a, 1b. Die Beschlagteile sind eben und haben an der schmalen Stirnseite eine schlitzförmige Ausnehmung 2 mit einem schwalbenschwanzförmigen Querschnitt. Eine Zugschraube 4 mit einem Senkkopf ist durch eine Bohrung 3 so weit in ein Bauteil (nicht gezeigt) eingeschraubt, daß die Seiten des Senkkopfes an den Schwalbenschwanzflanken der Ausnehmung anliegen, wobei der Winkel des Senkkopfes mit dem Flankenwinkel korrespondiert. Mit dieser Einstellung ist gleichzeitig gewährleistet, daß die beiden Beschlagteile aneinandergepreßt werden. Zur Erhöhung der Auszugskraft des Beschlages ist eine zweite Zugschraube 5 in einer Bohrung 4 vorgesehen. Der Kopf dieser Zugschraube ist so weit eingesenkt, daß eine Behinderung bei der Anlage der beiden Beschlagteile vermieden wird.

Nachfolgend wird der Aufbau und die Funktion der Arretiervorrichtung beschrieben:
Am Außenendabschnitt ist das Beschlagteil 1a doppelkeilförmig ausgebildet. Die schräg verlaufenden Seiten, nachfolgend als Keilflanken 8 bezeichnet, weisen am hinteren Ende, d. h. zur Beschlagteilmitte hin, je eine Einrastausnehmung 9 auf. Am korrespondierenden Beschlagteil 1b ist ein Federelement 10 angeordnet, wobei das Federelement ein U-förmig gebogener Federstahldraht ist, dessen Enden rechtwinklig nach oben abgewinkelt sind. Das Federelement 10 ist an der Unterseite des Beschlagteils in einer Ausnehmung 13 so angeordnet, daß die Beweglichkeit des Federelements nicht behindert wird. Die abgewinkelten Enden 11 liegen in seitlichen Schlitzen 14 des Beschlagteils und ragen über der Oberfläche des Beschlagteils so weit heraus, um mit den gegen-überliegenden zwei Keilflanken 8 des korrespondierenden Beschlagteils in Wirkverbindung treten zu können. Um einen besonders sicheren Halt der Arretierabschnitte 11 in den Einrastausnehmungen 9 zu gewährleisten, ist in der Einrastausnehmung 9 eine Hinterschneidung 12 vorgesehen. Diese verhindert, daß das Federelement 10 leicht herausgezogen werden kann. Das Federelement 10 kann nur mittels eines Werkzeuges, z. B. eines Schraubenziehers oder eines Hakens, der in die Eingriffsausnehmung 15 gesteckt wird, entfernt werden. Dazu ist es jedoch erforderlich, das Federelement vollständig aufzubiegen.

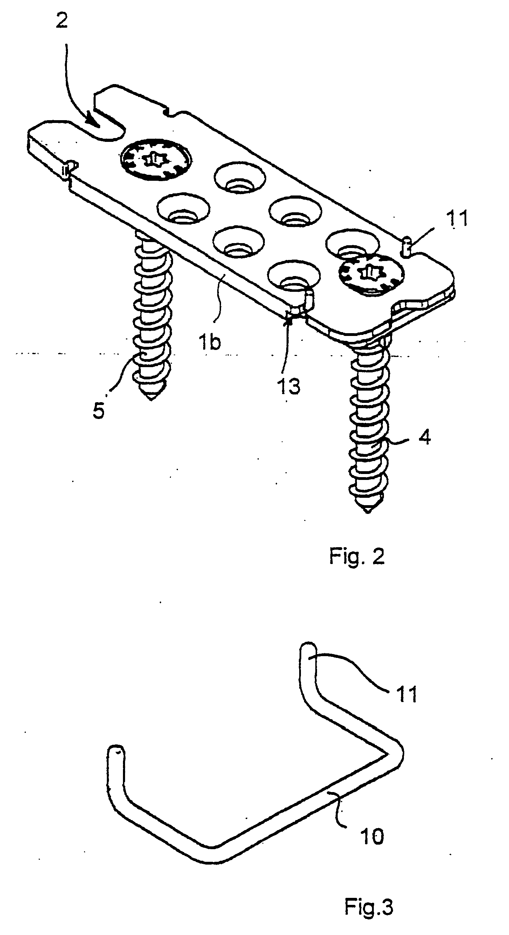

In Fig. 2 ist lediglich die untere Beschlaghälfte dargestellt, so daß die Anordnung des Federelements 10 besser sichtbar wird.

Fig. 3 zeigt das Federelement 10 mit den abgewinkelten Enden 11.

Dem Fachmann ist klar, daß nach der offenbarten technischen Lehre die Erfindung auch modifiziert werden kann, wie z. B. durch eine andere Gestaltung der schlitzförmige Ausnehmung 2 in Verbindung einem dazu passend gewählten Schraubenkopf. Weiterhin können auch Beschlagteile mit zwei oder mehreren Ausnehmungen 2 eingesetzt werden, wobei die Anzahl der Arretiereinrichtungen 6 nach bautechnologischen Erfordernissen gewählt wird.

## Patentansprüche

1. Beschlag zum Verbinden von Bauteilen bestehend aus zwei plattenförmigen Beschlagteilen **(1a, 1b),** die auf den zu verbindenden Bauteilen mittels Befestigungsschrauben aufgeschraubt sind, wobei
- jedes Beschlagteil **(1a, 1b)** eben ist und wenigstens eine seitliche schlitzförmige Ausnehmung **(2)** aufweist,
- gegenüber der schlitzförmigen Ausnehmung **(2)** eine erste Bohrung **(3.1)** vorgesehen ist, durch die hindurch im Montagezustand eine erste Zugschraube **(4)** so weit eingeschraubt ist, daß der Schraubenkopf ein vorbestimmtes Maß hervorsteht, wobei
- die schlitzförmige Ausnehmung **(2)** auf ein vorbestimmtes Maß so hinterschnitten ist, daß im Montagezustand die Ausnehmung **(2)** des einen Beschlagteils **(1a)** den hervorstehendem Schraubenkopf des anderen Beschlagteils **(1b)** hintergreift und beide plattenförmigen Beschlagteile **(1a, 1b)** plan aneinandergepreßt sind,
- am Ende der schlitzförmigen Ausnehmung **(2)** in Richtung der ersten Bohrung **(3.1)** eine zweite Bohrung **(3.2)** vorgesehen ist, durch die hindurch eine zweite Zugschraube **(5)** mit einem versenkten Kopf eingeschraubt ist und
- wenigstens eine Arretiervorrichtung **(6)** mit folgenden Merkmalen vorgesehen ist:
- ein Außenendabschnitt **(7)** des Beschlagteils **(1a)** ist keilförmig ausgebildet,
- am hinteren Ende einer Keilflanke **(8)** ist eine Ausnehmung **(9)** vorgesehen und
- am Beschlagteil **(1b)** ist ein drahtförmiges Federelement **(10)** angeordnet, wobei wenigstens ein Abschnitt des Federelements **(10)** als Arretierabschnitt **(11)** ausgebildet ist, der der Keilflanke **(8)** so zugeordnet ist, daß beim Zusammenfügen des Beschlags die Keilflanke **(8)** den Arretierabschnitt **(11)** gegen die Federkraft des Federelements **(10)** verschiebt, bis der Arretierabschnitt **(11)** in die Ausnehmung **(9)** eingerastet ist.

2. Beschlag nach Anspruch 1, **dadurch gekennzeichnet, daß** die Ausnehmung **(9)** eine Hinterschneidung **(12)** aufweist, um ein Herausziehen des Arretierabschnitts **(11)** gegen die Federkraft zu verhindern.

3. Beschlag nach Anspruch 1 oder 2, **dadurch gekennzeichnet, daß** das Federelement **(10)** ein U-förmig gebogener Federstahldraht ist, dessen Enden rechtwinklig nach oben abgewinkelt sind, wobei das Federelement an der Unterseite des Beschlagteils **(1b)** in einer Ausnehmung **(13)** angeordnet ist und die abgewinkelten Enden in seitlichen Schlitzen **(14)** des Beschlagteils **(1b)** liegen und über der Oberfläche des Beschlagteils **(1b)** so weit herausragen, um mit den gegenüberliegenden zwei Keilflanken **(8)** des Beschlagteils **(1a)** in Wirkverbindung treten zu können.

4. Beschlag nach einem der vorhergehenden Ansprüche, **dadurch gekennzeichnet, daß** der Querschnitt des drahtförmiges Federelements **(10)** ein Kreis oder ein Rechteck ist.

5. Beschlag nach einem der vorhergehenden Ansprüche, **dadurch gekennzeichnet, daß** die Arretiervorrichtung eine Eingriffsausnehmung **(15)** zum Entfernen des Federelements **(10)** im Verbundzustand aufweist, wobei das Federelement **(10)** plastisch verformt oder zerstört wird.

6. Beschlag nach einem der vorhergehenden Ansprüche, **dadurch gekennzeichnet, daß** die Arretiervorrichtung **(6)** wechselseitig an beiden Beschlagteilen **(1a, 1b)** vorgesehen ist.

## Claims

1. A fitting for joining structural members, which comprises two plate-shaped parts (1a, 1b) each of which is fixed by screws to the respective one of the structural members to be jointed together, wherein
each fitting part (1a, 1b) is evenly formed and provided with at least one lateral slot-shaped recess (2),
a first bore hole (3.1) is formed opposite to the slot-shaped recess (2), through which a first tension screw (4) is screwed into a structural member so that the head of the screw projects with a predetermined measure, wherein
the slot-shaped recess (2) is undercut with a predetermined measure so that, when the fitting is assembled, the recess (2) of one fitting part (1a) engages behind the projecting screw head of the other fitting part (1b), and both plate-shaped fitting parts (1a, 1b) are pressed against one another in a planar manner,
each of the fitting parts is provided with a second bore hole (3.2) arranged also opposite to the slot-shaped recess (2), but closer to that than the first bore hole (3.1), through which a second tension screw (5) having a countersunk head is screwed into that structural member, and at least one arresting device (6) is provided, the features of which are as follows:
one of the longitudinal end portions of the fitting part (1a) is formed like a wedge,
the basis of one of the wedge flanks (8) is provided with a recess (9) and
a springy element made of spring wire (10) is arranged on the fitting part (1b), wherein at least one portion of the springy element (10) is formed as an arresting portion (11), which, when the fitting is assembled, slides along the wedge, flank (8) under the force of the springy element (10) and finally engages the recess (9).

2. A fitting according to claim 1, **characterized in that** the recess (9) comprises an undercut (12) for preventing the arresting portion (11) from being drawn out from the recess (9) against the force of the springy element (10).

3. A fitting according to claim 1 or 2, **characterized in that** the springy element (10) is made from spring wire to a u-shaped piece the ends of which are bent upwardly by 90 degrees, wherein the springy element is accommodated in a recess (13) on the bottom surface of the fittings element (1b), with the arresting portions of which being held in lateral slots (14) of the fitting part (1b) so that they extent beyond the top surface of the fitting part (1b) and contact the wedge flanks (8) of the fitting part (1a).

4. A fitting according to any of the preceding claims, **characterized in that** the springy element (10) has a circular or a rectangular cross section.

5. A fitting according to any of the preceding claims, **characterized in that** the arresting device comprises a recess (15) for a tool to be used for deforming or damaging the springy element (10) when the assembly is to be dismantled.

6. A fitting according to any of the preceding claims, **characterized in that** the arresting device (6) is arranged alternately on both fitting parts (1a, 1b).

## Revendications

1. Armature pour assembler des composants comprenant deux parties d'armature (1a, 1b) en forme de plaque, lesquelles sont vissées sur les composants à assembler au moyen de vis de fixation, étant précisé que
- chaque partie d'armature (1a, 1b) est plane et comporte au moins un creux (2) latéral en forme de fente,
- en face du creux (2) en forme de fente est prévu un premier alésage (3.1), à travers lequel à l'état de montage une première vis de traction (4) est vissée jusqu'à ce que la tête de vis fasse saillie sur une mesure prédéterminée, sachant que
- le creux (2) en forme de fente est contre-dépouillé sur une mesure prédéterminée à tel point qu'à l'état de montage le creux (2) de l'une des parties d'armature (1a) a prise par l'arrière avec la tête de vis saillante de l'autre partie d'armature (1b), et les deux parties d'armature (1a, 1b) en forme de plaque sont pressées l'une contre l'autre de manière plane,
- à l'extrémité du creux (2) en forme de fente en direction du premier alésage (3.1) est prévu un second alésage (3.2), à travers lequel est vissé une seconde vis de traction (5) à tête fraisée et
- au moins un dispositif d'arrêt (6) avec les caractéristiques suivantes est prévu :
- une section terminale extérieure (7) de la partie d'armature (1a) est réalisée de manière cunéiforme,
- à l'extrémité arrière d'un flanc de coin (8) est prévu un creux (9) et
- au niveau de la partie d'armature (1b) est disposé un élément élastique (10) en forme de fil métallique, au moins une section de l'élément élastique (10) étant réalisée comme section d'arrêt (11) qui est attribuée de telle façon au flanc de coin (8) que pendant l'assemblage de l'armature le flanc de coin (8) déplace la section d'arrêt (11) contre la force élastique de l'élément élastique (10) jusqu'à ce que la section d'arrêt s'enclenche dans le creux (9).

2. Armature selon la revendication 1, **caractérisée en ce que** le creux (9) comporte une contre-dépouille (12) pour empêcher un retrait de la section d'arrêt (11) contre la force élastique.

3. Armature selon la revendication 1 ou 2, **caractérisée en ce que** l'élément élastique (10) est un fil d'acier pour ressort, plié en forme de U, dont les extrémités sont pliées vers le haut à angle droit, l'élément élastique étant disposé dans un creux (13) au niveau de la face inférieure de la partie d'armature (1b), et les extrémités pliées se situant dans des fentes latérales (14) de la partie d'armature (1b) et dépassant de la surface de la partie d'armature (1b) au point de pouvoir entrer en liaison active avec les deux flancs de coin (8) opposés de la partie d'armature (1a).

4. Armature selon l'une quelconque des revendications précédentes, **caractérisée en ce que** la section transversale de l'élément élastique (10) en forme de fil métallique est un cercle ou un rectangle.

5. Armature selon l'une quelconque des revendications précédentes, **caractérisée en ce que** le dispositif d'arrêt comporte un creux de prise (15) pour enlever l'élément élastique (10) à l'état d'assemblage, l'élément élastique (10) étant déformé de manière plastique ou détruit.

6. Armature selon l'une quelconque des revendications précédentes, **caractérisée en ce que** le dispositif d'arrêt (6) est prévu réciproquement sur les deux parties d'armature (1a, 1b).
